(19) Europäisches Patentamt
European Patent Office
Office européen des brevets

(11) **EP 4 730 468 A1**

(12) **EUROPEAN PATENT APPLICATION**
published in accordance with Art. 153(4) EPC

(43) Date of publication:
**22.04.2026 Bulletin 2026/17**

(21) Application number: **24886324.3**

(22) Date of filing: **01.11.2024**

(51) International Patent Classification (IPC):
$H01M\ 10/058$ (2010.01)   $H01M\ 4/131$ (2010.01)
$H01M\ 4/136$ (2010.01)   $H01M\ 4/36$ (2006.01)
$H01M\ 4/58$ (2010.01)   $H01M\ 4/525$ (2010.01)
$H01M\ 4/505$ (2010.01)   $H01M\ 4/133$ (2010.01)
$H01M\ 4/134$ (2010.01)   $H01M\ 4/38$ (2006.01)

(52) Cooperative Patent Classification (CPC):
H01M 4/131; H01M 4/133; H01M 4/134;
H01M 4/136; H01M 4/36; H01M 4/38; H01M 4/505;
H01M 4/525; H01M 4/58; H01M 10/058;
Y02E 60/10

(86) International application number:
**PCT/KR2024/016980**

(87) International publication number:
**WO 2025/095652 (08.05.2025 Gazette 2025/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.11.2023 KR 20230148983**
**31.10.2024 KR 20240151731**

(71) Applicant: **LG Energy Solution, Ltd.
Seoul 07335 (KR)**

(72) Inventors:
• **LEE, Dongjun
Daejeon 34122 (KR)**
• **KANG, Soobin
Daejeon 34122 (KR)**
• **PARK, Hyun Woo
Daejeon 34122 (KR)**
• **JUN, Chan Soo
Daejeon 34122 (KR)**

(74) Representative: **Hoffmann Eitle
Patent- und Rechtsanwälte PartmbB
Arabellastraße 30
81925 München (DE)**

(54) **LITHIUM SECONDARY BATTERY**

(57)    Disclosed is a lithium secondary battery including: a positive electrode; a negative electrode; and an electrolyte, wherein the positive electrode comprises a positive electrode active material layer comprising a positive electrode active material layer composition, wherein the negative electrode comprises a negative electrode active material layer comprising a negative electrode active material layer composition, wherein the positive electrode active material layer composition comprises a positive electrode active material comprising a layered active material containing nickel, and an olivine-based active material, wherein the negative electrode active material layer composition comprises a negative electrode active material comprising a silicon-based active material, and wherein a part by weight of the olivine-based active material (A) based on 100 parts by weight of the positive electrode active material, and a part by weight of the silicon-based active material (B) based on 100 parts by weight of the negative electrode active material satisfy Formulas 1 and 2:

[Formula 1]

$$4.524 + 0.939 \times e^{0.0537 \times A} < B < -4.312 + 5.183 \times e^{0.0537 \times A}$$

[Formula 2]

$$10 \leq A \leq 90.$$

EP 4 730 468 A1

**FIG. 1**

**Description**

## CROSS-REFERENCE TO RELATED APPLICATION

The present application claims the benefit of and priority to Korean Patent Application No. 10-2023-0148983, filed on November 1, 2023, with the Korean Intellectual Property Office, the disclosure of which is incorporated herein by reference in its entirety for all purposes as if fully set forth herein.

## TECHNICAL FIELD

The present disclosure relates to a lithium secondary battery.

## BACKGROUND

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that utilizes such electrochemical energy, and the range of use thereof tends to be gradually expanding.

Along with the technology development and increased demand for mobile devices, demand for secondary batteries as energy sources is increasing sharply. Among such secondary batteries, lithium secondary batteries having high energy density and voltage, long cycle life and low self-discharging rate have been commercialized and widely used. In addition, research is being actively conducted on a method for manufacturing a high-density electrode having a higher energy density per unit volume as an electrode for such a high-capacity lithium secondary battery.

In general, a secondary battery includes a positive electrode, a negative electrode, an electrolyte, and a separator. A lithium secondary battery is usually manufactured by using a lithium-intercalated compound, such as $LiCoO_2$ or $LiMn_2O_4$ for the positive electrode, and a non-lithium intercalated material, such as a carbon-based or Si-based material for the negative electrode. During charging, the lithium ions intercalated to the positive electrode move to the negative electrode through the electrolyte solution. During discharging, the lithium ions move back to the positive electrode from the negative electrode.

The lithium secondary batteries are applied to various industrial fields such as automobiles, small modules, and mobile phones. The performance of lithium secondary batteries aimed in each field includes various factors, but in general, development of technology aimed at increasing energy density and securing stability, fast charging, and life performance is basically required.

In particular, as a negative electrode material, carbon-based materials such as graphite are excellent in stability and reversibility, but have a limitation in terms of capacity. Therefore, in fields for the purpose of high capacity, i.e., maximization of energy density, attempts to use Si-based materials with high theoretical capacity as the negative electrode material are increasing. However, when the Si-based material is simply included in a high content for the purpose of high capacity, the life performance deteriorates rapidly due to volume expansion compared to the carbon-based material, making it difficult to apply the Si-based material in real life.

In order to solve the problem that occurs when the Si-based material is used for a negative electrode, a variety of methods are discussed, such as a method of controlling a drive potential, a method of additionally coating a thin film on an active material layer, a method of suppressing volume expansion itself such as a method of controlling a particle diameter of a silicon-based compound or a development of a binder capable of suppressing volume expansion of a silicon-based compound to prevent disconnection of a conductive path. In addition, research is being conducted to supplement the life characteristics of the silicon-based negative electrode by limiting a proportion of the silicon-based active material used during initial charging and discharging by a method of pre-lithiating the silicon-based active material layer, and imparting a reservoir role.

As a counter electrode for the Si-based negative electrode, a positive electrode such as lithium nickel-cobalt-manganese(aluminum) oxide ("lithium NCM(A) oxide") containing a high content of nickel has been developed. When a positive electrode such as lithium NCM(A) oxide containing a high content of nickel is used, the high capacity characteristics, which are the advantage of the Si-based negative electrode, can be maintained, while the high energy density and the performance of fast charging can also be secured.

However, due to the characteristics of the Si-based negative electrode and the lithium NCM(A) oxide positive electrode containing a high content of nickel, the stability rapidly decreases. In particular, ignition issues related to electric vehicles have emerged as a major concern, resulting in a growing demand for lithium secondary batteries with enhanced thermal stability (thermal propagation; TP) specifications. However, batteries including the Si-based negative electrodes and the lithium NCM(A) oxide positive electrodes containing a high content of nickel suffer from inferior thermal stability because the energy stored in the same volume is larger in higher-energy cells, as with the life performance.

In order to solve the problems, an olivine-based positive electrode such as lithium iron phosphate (LFP) may be applied as a positive electrode that is a counter electrode for the Si-based negative electrode. That is, in order to solve the above-described thermal stability issue of a battery including a Si-based negative electrode and a lithium NCM(A) oxide positive electrode containing a high content of nickel, research is being conducted for securing the stability by using an LFP olivine-based positive electrode, even though the energy density and capacity characteristics are relatively low.

However, when the olivine-based positive electrode such as LFP is applied as the positive electrode, which is a counter electrode for the Si-based negative electrode, the above-described stability can be secured, but the capacity drops rapidly and there is no advantage compared to existing batteries.

In order to solve the above problems, research is being conducted on combining and applying various types of active materials to the positive electrode and the negative electrode, but the issues of securing the high energy density and the thermal stability and life performance, which cannot be incompatible, continue to be problematic.

Therefore, the development of technology aimed at increasing energy density and securing stability, fast charging, and life performance of lithium secondary batteries is continuously being conducted.

The background description provided herein Is for the purpose of generally presenting context of the disclosure. Unless otherwise indicated herein, the materials described in this section are not prior art to the claims in this application and are not admitted to be prior art, or suggestions of the prior art, by inclusion in this section.

## SUMMARY

A result of research on the above-described problems revealed that when the negative electrode includes a silicon-based active material and the positive electrode includes a mixture of a layered active material containing nickel and an olivine-based active material, the energy density and the thermal stability characteristics, which were previously incompatible, can be secured at the same time, and the problem of life characteristics can also be solved.

Accordingly, the invention according to the present disclosure has been made in an effort to provide a lithium secondary battery that can solve the above-described problems.

An exemplary embodiment of the present disclosure provides a lithium secondary battery including: a positive electrode; a negative electrode; and an electrolyte, wherein the positive electrode includes a positive electrode active material layer including a positive electrode active material layer composition, the negative electrode includes a negative electrode active material layer including a negative electrode active material layer composition, the positive electrode active material layer composition includes a positive electrode active material including a layered active material containing nickel, and an olivine-based active material, the negative electrode active material layer composition includes a negative electrode active material including a silicon-based active material, and a part by weight of the olivine-based active material (A) based on 100 parts by weight of the positive electrode active material, and a part by weight of the silicon-based active material (B) based on 100 parts by weight of the negative electrode active material satisfy Formulas 1 and 2:

[Formula 1]

$$4.524+0.939\times e^{0.0537\times A} < B < -4.312+5.183\times e^{0.0537\times A}$$

[Formula 2]

$$10 \leq A \leq 90.$$

The inventors of the present disclosure found that when the composition ratio of the positive electrode and the negative electrode is adjusted to the ranges of Formula 1 and Formula 2 as described above, the energy density and the life characteristics, which were previously incompatible, can be secured at the same time, and the problem of thermal stability can also be solved.

The lithium secondary battery according to the present disclosure basically has the features that the positive electrode includes the layered active material containing nickel, and the olivine-based active material, and the negative electrode includes a silicon-based active material. That is, the energy density can be secured (ED 700 Wh/L or more) by the combination as described above.

The energy density can be satisfied by including the layered active material containing nickel, and the silicon-based active material in the positive electrode so as to secure the energy density, instead of simply applying the carbon-based active material and the olivine-based active material individually, and the problem of thermal stability (TP) due to the resulting increase in capacity can be solved by deriving the weight ratio satisfying Formulas 1 and 2 above. In general, as the content of the silicon-based active material in the negative electrode increases, the energy density increases, but the thermal stability becomes inferior. Accordingly, when the content of the olivine-based active material in the positive electrode increases, the problem of thermal stability is improved, but the energy density decreases. However, through research, the inventors of the present disclosure derived the ratios of Formulas 1 and 2 as described above, and secured the energy density and the thermal stability at the same time when the ratios were applied.

That is, by adjusting the composition and content as described above, it is possible to secure the energy density while simultaneously securing the thermal stability, and by applying a predetermined amount of the silicon-based active material to the negative electrode as described above, the thickness of the active material layer can be reduced due to a reduction in the loading amount, and the migration speed of Li can be improved as the porosity is secured, which makes it possible to secure the performance of fast charging.

As a result, the lithium secondary battery according to the present disclosure can solve the incompatible thermal stability while securing the high energy density, secure the performance of fast charging, and exhibit superior life performance compared to existing cells (lithium NCM oxide/Si, LFP/Si) aimed at high energy density although exhibiting some inferior performance compared to other cells with enhanced life performance (LFP/Graphite, lithium manganese iron phosphate (LMFP)/Graphite, lithium NCM oxide/Graphite).

## BRIEF DESCRIPTION OF THE DRAWINGS

The accompanying drawings illustrate exemplary embodiments of the present disclosure and together with the following detailed description, serve to provide a further understanding of the technical aspect of the present disclosure, and thus the present disclosure should not be construed as being limited to the drawings.

FIG. 1 shows a lithium secondary battery according to an exemplary embodiment of the present disclosure.

FIG. 2 is a diagram showing a structure for evaluation of lithium secondary battery prepared in Examples and Comparative Examples of the present disclosure.

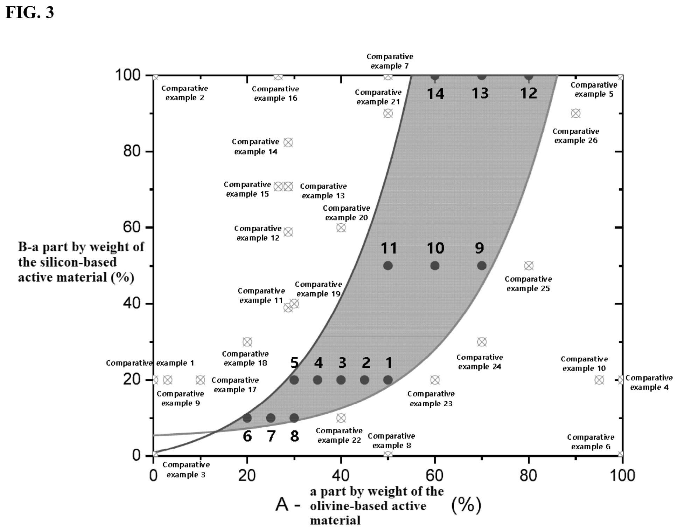

FIG. 3 is a graph showing the distribution based on the olivine-based active material and silicon-based active material in Examples and Comparative Examples of the present disclosure.

## DETAILED DESCRIPTION

Before describing the present disclosure, some terms are first defined.

When one part "includes", "comprises" or "has" one constituent element in the present disclosure, unless otherwise specifically described, this does not mean that another constituent element is excluded, but means that another constituent element may be further included.

In the present disclosure, 'p to q' means a range of 'p or more and q or less'.

In the present disclosure, the "specific surface area" is measured by the BET method, and specifically, is calculated from a nitrogen gas adsorption amount at a liquid nitrogen temperature (77K) by using BELSORP-mino II available from BEL Japan, Inc. That is, in the present disclosure, the BET specific surface area may refer to the specific surface area measured by the above measurement method.

In the present disclosure, "Dn" means a particle size distribution, and means a particle diameter at the n% point in the cumulative distribution of the number of particles according to the particle diameter. That is, D50 is a particle diameter at the 50% point in the cumulative distribution of the number of particles according to the particle diameter, D90 is a particle diameter at the 90% point in the cumulative distribution of the number of particles according to the particle diameter, and D10 is a particle diameter at the 10% point in the cumulative distribution of the number of particles according to the particle diameter. Meanwhile, the particle size distribution may be measured using a laser diffraction method. Specifically, after powder to be measured is dispersed in a dispersion medium, the resultant dispersion is introduced into a commercially available laser diffraction particle size measurement apparatus (for example, Microtrac S3500) in which a difference in a diffraction pattern according to the particle size is measured, when a laser beam passes through particles, and then a particle size distribution is calculated.

In the present disclosure, the description "a polymer includes a certain monomer as a monomer unit" means that the monomer participates in a polymerization reaction and is included as a repeating unit in the polymer. In the present disclosure, when a polymer includes a monomer, this is interpreted to be the same as when the polymer includes a monomer as a monomer unit.

In the present disclosure, it is understood that the term 'polymer' is used in a broad sense including a copolymer unless otherwise specified as 'a homopolymer'.

In the present disclosure, a weight-average molecular weight (Mw) and a number-average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight. In the present disclosure, a molecular weight refers to a weight-average molecular weight unless particularly described otherwise.

Hereinafter, embodiments of the present disclosure will be described in detail with reference to the drawings so that one skilled in the art can readily implement the present disclosure. However, the present disclosure may be embodied in various different forms, and is not limited to the following descriptions.

An exemplary embodiment of the present disclosure provides a lithium secondary battery including: a positive electrode; a negative electrode; and an electrolyte, wherein the positive electrode includes a positive electrode active material layer including a positive electrode active material layer composition, the negative electrode includes a negative electrode active material layer including a negative electrode active material layer composition, the positive electrode active material layer composition includes a positive electrode active material including a layered active material containing nickel, and an olivine-based active material, the negative electrode active material layer composition includes a negative electrode active material including a silicon-based active material, and when a part by weight of the olivine-based active material is A based on 100 parts by weight of the positive electrode active material, and a part by weight of the silicon-based active material is B based on 100 parts by weight of the negative electrode active material, A and B satisfy Formulas 1 and 2:

[Formula 1]

$$4.524+0.939 \times e^{0.0537 \times A} < B < -4.312+5.183 \times e^{0.0537 \times A}$$

[Formula 2]

$$10 \leq A \leq 90.$$

The lithium secondary battery according to the present disclosure can solve the incompatible thermal stability by the combination of the positive and negative electrode active materials satisfying the ranges of Formulas 1 and 2 while securing the high energy density, secure the performance of fast charging, and exhibit superior life performance compared to existing cells (lithium NCM oxide/Si, LFP/Si) aimed at high energy density although some inferior performance compared to other cells with enhanced life performance (LFP/Graphite, LMFP/Graphite, lithium NCM oxide/Graphite).

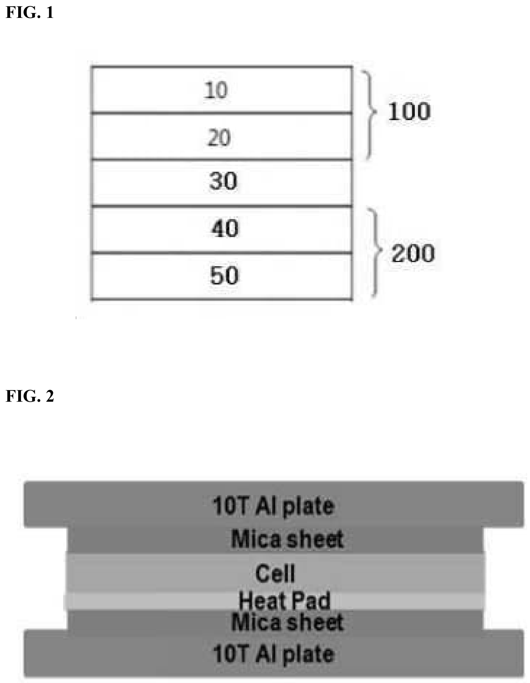

FIG. 1 is a view showing a stack structure of a lithium secondary battery according to an exemplary embodiment of the present disclosure. Specifically, a negative electrode 100 including a negative electrode active material layer 20 on one surface of a negative electrode current collector layer 10 can be seen, a positive electrode 200 including a positive electrode active material layer 40 on one surface of a positive electrode current collector layer 50 can be seen, and the negative electrode 100 and the positive electrode 200 for a lithium secondary battery are formed in a stack structure with a separator 30 interposed therebetween.

In the present disclosure, the lithium secondary battery may further include a separator between the cathode and the anode.

Below, the positive electrode, negative electrode, electrolyte, and separator included in the lithium secondary battery will be described, respectively.

In the present disclosure, the negative electrode includes a negative electrode active material layer including a negative electrode active material layer composition.

In the present disclosure, the negative electrode includes a negative electrode current collector layer and a negative electrode active material layer including a negative electrode active material layer composition and provided on one surface or both surfaces of the negative electrode current collector layer.

In this case, the negative electrode active material layer composition may include one or more selected from the group consisting of a negative electrode active material, a negative electrode conductive material, and a negative electrode binder.

In the present disclosure, the positive electrode includes a positive electrode active material layer including a positive electrode active material layer composition.

In the present disclosure, the positive electrode includes a positive electrode current collector layer and a positive electrode active material layer including a positive electrode active material layer composition and provided on one surface or both surfaces of the positive electrode current collector layer.

In this case, the positive electrode active material layer composition may include one or more selected from the group consisting of a positive electrode active material, a positive electrode conductive material, and a positive electrode binder.

In an exemplary embodiment of the present disclosure, the negative electrode active material includes a silicon-based active material, and the positive electrode active material includes a layered active material containing nickel, and an olivine-based active material.

As a negative electrode active material, carbon-based materials such as graphite are excellent in stability and reversibility, but have a limitation in terms of capacity. Therefore, in fields for the purpose of high capacity, silicon-based active materials with high theoretical capacity are applied.

However, in order to apply a silicon-based active material alone, the issue of volume expansion should be appropriately solved, but no alternative has been found. Accordingly, for the negative electrode active material according to the present disclosure, a silicon-based active material is used, and at the same time, for the positive electrode active material, a layered active material containing nickel, and an olivine-based active material are mixed and applied.

In an exemplary embodiment of the present disclosure, there is provided the lithium secondary battery in which the olivine-based active material may be included in an amount of 10 parts by weight or more and 90 parts or less and the layered active material containing nickel may be included in an amount of 10 parts by weight or more and 95 parts by weight or less based on 100 parts by weight of the positive electrode active material.

In another exemplary embodiment, the olivine-based active material may be included in an amount of 10 parts by weight or more and 90 parts or less, preferably 10 parts by weight or more and 85 parts or less, and more preferably 20 parts by weight or more and 80 parts or less based on 100 parts by weight of the positive electrode active material.

In the present disclosure, the parts by weight of the olivine-based active material based on 100 parts by weight of the positive electrode active material may be expressed as A as described above.

In another exemplary embodiment, the layered active material containing nickel may be included in an amount of 10 parts by weight or more and 95 parts by weight or less, preferably 15 parts by weight or more and 90 parts by weight or less, and more preferably 20 parts by weight or more and 80 parts by weight or less based on 100 parts by weight of the positive electrode active material.

In an exemplary embodiment of the present disclosure, there is provided the lithium secondary battery in which the silicon-based active material may be included in an amount of 5 parts by weight or more and 100 parts by weight or less based on 100 parts by weight of the negative electrode active material.

In another exemplary embodiment, the silicon-based active material may be included in an amount of 5 parts by weight or more and 70 parts by weight or less, preferably 7 parts by weight or more and 60 parts by weight or less, and more preferably 10 parts by weight or more and 50 parts by weight or less based on 100 parts by weight of the negative electrode active material.

In the present disclosure, the part by weight of the silicon-based active material based on 100 parts by weight of the negative electrode active material may be expressed as B as described above.

In the present disclosure, the silicon (Si) in the silicon-based active material may be included in an amount of 30 to 100 parts by weight based on 100 parts by weight of the silicon-based active material. That is, in the present disclosure, the silicon-based active material may include one or more selected from the group consisting of $SiO_x$ (x=0), $SiO_x$ (0<x<2), Si/C, and Si alloys, where the weight ratio of silicon (Si) in the silicon-based active material can satisfy the above range.

In the present disclosure, the negative electrode active material may further include a carbon-based active material, and the silicon-based active material may be included in an amount of 5 parts by weight or more and less than 100 parts by weight, and the carbon-based active material may be included in an amount of more than 0 part by weight and 95 parts by weight based on 100 parts by weight of the negative electrode active material.

In another exemplary embodiment, the carbon-based active material may be included in an amount of 30 parts by weight or more and 95 parts by weight or less, preferably 40 parts by weight or more and 93 parts by weight or less, and more preferably 50 parts by weight or more and 90 parts by weight or less based on 100 parts by weight of the negative electrode active material.

In general, the higher-energy cell stores more energy in the same volume, and accordingly, suffers from inferior thermal stability. That is, when the content of the silicon-based active material in the negative electrode is increased, the energy density is secured, but the thermal stability is reduced, and when the content of the olivine-based active material in the positive electrode is increased, the thermal stability is improved, but the energy density is reduced.

However, according to the present disclosure, the specific compositions and the contents satisfying Formulas 1 and 2 are applied to the positive electrode and the negative electrode, respectively, as described above, and accordingly, it is possible to achieve the feature of securing the energy density and the thermal stability at the same time. That is, in the lithium secondary battery of the present disclosure, the energy density may be reduced compared to the case where the silicon-based negative electrode and the positive electrode including a layered active material containing nickel are applied alone, but as the compositions and contents as described above are satisfied, the energy density of 700 Wh/L or more can be secured, and at the same time, the thermal stability can be secured, which are the main purpose of the present disclosure.

That is, when the content (A) of the olivine-based active material and the content (B) of the silicon-based active material satisfy the range of Formula 1, the energy density of 700 Wh/L or more can be secured, and a TR rate of 4 or less can be satisfied. If the range of Formula 1 is not satisfied, the energy density of the cell is not secured, and the TR rate is not secured, so the problem of thermal stability cannot be solved.

In an exemplary embodiment of the present disclosure, the layered active material containing nickel included in the positive electrode active material may be lithium nickel-cobalt-aluminum (NCA) oxide; lithium nickel-cobalt-manganese (NCM) oxide; or lithium nickel-cobalt-manganese-aluminum (NCMA) oxide, and the olivine-based active material may be lithium manganese iron phosphate (LMFP) or lithium iron phosphate (LFP).

In this case, LMFP may be expressed as $LiMn_xFe_{1-x}PO_4$, and LFP may be expressed as $LiFePO_4$, where x may have a value of $0 < x < 1$.

In general, positive electrode active materials may be broadly classified into layered, spinel, or olivine types depending on the type of crystal lattice structure.

In the present disclosure, the layered active material containing nickel may generally include a ternary alloy material, such as lithium nickel-cobalt-aluminum (NCA) oxide; lithium nickel-cobalt-manganese (NCM) oxide; or lithium nickel-cobalt-manganese-aluminum (NCMA) oxide. In the layered active material, the constituent elements of the positive electrode active material are located in a layered structure, so lithium ions are stored between the crystal lattice layers when charging a lithium secondary battery. At this time, a large amount of lithium ions can be stored between the wide and flat layers, so the advantage of high energy capacity is obtained when the material is used, but the problem of poor stability is caused during high-voltage charging.

In the present disclosure, the olivine-based active material may be LMFP or LFP, and is generally in the form of a hexahedron, so it has higher lattice structure stability compared to layered active materials and has the characteristics of high life and thermal stability due to less deterioration of the crystal structure even when lithium ions escape during discharging. However, the olivine-based active material has the problems of slow lithium ion diffusion speed and relatively low energy density.

In addition, the spinel structure is an oxide crystal structure and does not use cobalt, so the lattice structure has a three-dimensional shape and is excellent in safety. However, the spinel structure has the problem that the capacity and the life decrease as charging and discharging progress.

The positive electrode active material according to the present disclosure is a layered active material containing nickel, and in particular, lithium nickel-cobalt-manganese (NCM) oxide and olivine-based active material are characterized by using LMFP.

In an exemplary embodiment of the present disclosure, the LMFP may contain more than 0 at% and equal to or less than 90 at% of Mn based on 100 at% of all elements included in the LMFP.

For the olivine-based active material, LFP or LMFP, which have the same structure, may be used, but in the case of LMFP, Mn is substituted for Fe, which has the effect of increasing the voltage, which can in turn increase the energy density even among olivine-based active materials with relatively low energy density.

In the present disclosure, there is provided the lithium secondary battery in which the positive electrode active material is a single-particle positive electrode active material.

In addition, there is provided the lithium secondary battery in which nickel contained in the layered active material containing nickel is included in an amount of 75 mol% or less of the total metal excluding lithium.

Generally, when implementing high-voltage cells in a lithium secondary battery including a silicon-based active material, it is necessary to use secondary particles as a positive electrode active material so as to solve the resistance problem. However, in the high-voltage cells, secondary particle breakage occurs to cause an issue of gas generation. In contrast, when the single-particle positive electrode active material is applied as described above, it is possible to drive high-voltage cells.

In the present disclosure, the carbon-based active material included in the negative electrode active material may include natural graphite, artificial graphite, expanded graphite, carbon fiber, non-graphitizable carbon, carbon black, carbon nanotubes, fullerene, or activated carbon, and the silicon-based active material may include one or more selected from the group consisting of SiOx (0<x<2), Si/C, and a Si alloy.

More specifically, the carbon-based active material included in the negative electrode active material may include natural graphite or artificial graphite, and the silicon-based active material may include Si/C.

In the present disclosure, the Si/C may be expressed as a silicon carbon composite.

In the present disclosure, the silicon carbon composite is a composite of Si and C, and is distinguished from silicon carbide expressed as SiC. The silicon carbide does not react electrochemically with lithium, so all performance, including life, may be measured as 0.

The silicon carbon composite may be a composite of silicon, graphite, etc., and may form a structure in which a core composite of silicon, graphite, etc. is surrounded by graphene, amorphous carbon, or the like. In the silicon carbon composite, silicon may be nano silicon. For example, the nano silicon may be silicon ranging from 1 nm to 999 nm.

A lithium secondary battery has a size required depending on its application, and accordingly, should be designed in a limited space. Consumer demands for increased energy density and improved high-output performance are increasing, but when a positive electrode material with high capacity is used, a content of a negative electrode material should be correspondingly increased to adapt to the positive electrode material. Accordingly, there is a limit to increasing battery efficiency in a limited space. In addition, it is necessary to design a positive electrode material having efficiency adapted to the efficiency of the negative electrode material, depending on the type of negative electrode material.

Accordingly, the present disclosure may apply a mixture of Si/C as a silicon-based active material and at the same time may use a material of the above-described composition and content as a positive electrode active material, thereby securing the energy density and at the same time ensuring the life performance and thermal stability.

According to the present disclosure, the negative electrode may include a negative electrode current collector layer and a negative electrode active material layer provided on one surface or both surfaces of the negative electrode current collector layer.

The negative electrode current collector layer generally has a thickness of 1 $\mu$m to 100 $\mu$m. Such a negative electrode current collector is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the negative electrode current collector layer may have microscopic irregularities formed on a surface to enhance a bonding force of the negative electrode active material, and may be used in various forms such as a film, a sheet, a foil, a net, a porous body, a foamed body, or a non-woven fabric body.

However, the thickness may be variously modified depending on a type and a use of negative electrode used, and is not limited thereto.

Note that an average particle diameter (D50) of the silicon-based active material of the present disclosure may be 5 $\mu$m to 10 $\mu$m, specifically 5.5 $\mu$m to 8 $\mu$m, and more specifically 6 $\mu$m to 7 $\mu$m. If the average particle diameter is less than 5 $\mu$m, the specific surface area of the particle increases excessively, causing the viscosity of the negative electrode slurry to increase excessively. Accordingly, the particles constituting the negative electrode slurry are not smoothly dispersed. In addition, if the size of the silicon-based active material is excessively small, a contact area between the silicon particles and the conductive material is reduced due to the composite consisting of the conductive material and the binder in the negative electrode slurry, so that a disconnection possibility of the conductive network increases, thereby lowering the capacity retention rate. On the other hand, if the average particle diameter is greater than 10 $\mu$m, excessively large silicon particles are present, so that the surface of the negative electrode is not smooth, causing current density unevenness during charging and discharging. Additionally, if the silicon particles are excessively large, the phase stability of the negative electrode slurry becomes unstable, degrading processability. As a result, the capacity retention rate of the battery decreases.

In an exemplary embodiment of the present disclosure, the silicon-based active material generally has a characteristic BET surface area. The BET surface area of the silicon-based active material is preferably 0.1 $m^2$/g to 150.0 $m^2$/g, more preferably 0.1 $m^2$/g to 100.0 $m^2$/g, particularly preferably 0.2 $m^2$/g to 80.0 $m^2$/g, and most preferably 0.2 $m^2$/g to 18.0 $m^2$/g. The BET specific surface area is measured in accordance with DIN 66131 (using nitrogen).

In an exemplary embodiment of the present disclosure, the silicon-based active material may be present, for example, in a crystalline or amorphous form, and is preferably not porous. The silicon particles are preferably spherical or fragment-shaped particles. Alternatively, but less preferably, the silicon particles may also have a fiber structure or be present in the form of a silicon-containing film or coating.

In an exemplary embodiment of the present disclosure, the silicon-based active material may be included in an amount of 60 parts by weight or more based on 100 parts by weight of the negative electrode active material layer composition.

In another exemplary embodiment, the silicon-based active material may be included in an amount of 60 parts by weight or more, preferably 65 parts by weight or more, and more preferably 70 parts by weight or more, and 95 parts by weight or less, preferably 90 parts by weight or less, and more preferably 80 parts by weight or less based on 100 parts by weight of the negative electrode active material layer composition.

The negative electrode active material layer composition according to the present disclosure uses the specific negative electrode conductive material and negative electrode binder capable of controlling the volume expansion rate during charging and discharging even when the silicon-based active material having a significantly high capacity is used within the above range. Accordingly, even when the silicon-based active material is within the above range, the negative electrode active material layer composition does not degrade the performance of the negative electrode and has excellent output characteristics in charging and discharging.

In the related art, it is general to use only graphite-based compounds as the negative electrode active material. However, in recent years, as the demand for high-capacity batteries is increasing, attempts to mix and use silicon-based compounds are increasing in order to increase capacity. However, the silicon-based compounds have limitations in that the volume rapidly expands during the charging/discharging, resulting in damage to the conductive path formed in the negative electrode active material layer to degrade the performance of the battery.

Therefore, in an exemplary embodiment of the present disclosure, the negative electrode active material layer composition may include a negative electrode conductive material and a negative electrode binder. That is, the negative electrode conductive material plays a role in securing a conductive path, and the binder plays a role in holding the negative electrode conductive material during charging and discharging.

In an exemplary embodiment of the present disclosure, the negative electrode conductive material may include one or more selected from the group consisting of a point-like conductive material, a planar conductive material, and a linear conductive material.

In an exemplary embodiment of the present disclosure, the point-like conductive material refers to a conductive material that may be used for improving conductivity of the negative electrode, forms conductivity without causing a chemical change and has a circular or point shape. Specifically, the point-like conductive material may be one or more selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In an exemplary embodiment of the present disclosure, the point-like conductive material may have a BET specific surface area of 40 m$^2$/g or greater and 70 m$^2$/g or less, preferably 45 m$^2$/g or greater and 65 m$^2$/g or less, and more preferably 50 m$^2$/g or greater and 60 m$^2$/g or less.

In an exemplary embodiment of the present disclosure, a particle diameter of the point-like conductive material may be 10 nm to 100 nm, preferably 20 nm to 90 nm, and more preferably 40 nm to 60 nm.

In an exemplary embodiment of the present disclosure, the conductive material may include a planar conductive material.

The planar conductive material refers to a conductive material that improves conductivity by increasing surface contact between silicon particles in the negative electrode and at the same time serves to suppress disconnection of the conductive path due to the volume expansion. The planar conductive material may be expressed as a plate-like conductive material or a bulk-type conductive material.

In an exemplary embodiment of the present disclosure, the planar conductive material may include one or more selected from the group consisting of plate-like graphite, graphene, graphene oxide, and graphite flake, and preferably may be plate-like graphite.

In an exemplary embodiment of the present disclosure, an average particle diameter (D50) of the planar conductive material may be 2 μm to 7 μm, specifically 3 μm to 6 μm, and more specifically 4 μm to 5 μm. When the above range is satisfied, the sufficient particle size results in easy dispersion without causing an excessive increase in viscosity of the negative electrode slurry. Therefore, the dispersion effect is excellent when dispersing using the same equipment and time.

In an exemplary embodiment of the present disclosure, there is provided the negative electrode composition in which the planar conductive material has D10 of 0.5 μm or greater and 1.5 μm or less, D50 of 4.0 μm or greater and 5.0 μm or less, and D90 of 7.0 μm or greater and 15.0 μm or less.

In an exemplary embodiment of the present disclosure, for the planar conductive material, a planar conductive material with a high specific surface area having a high BET specific surface area or a planar conductive material with a low specific surface area may be used.

In an exemplary embodiment of the present disclosure, for the planar conductive material, a planar conductive material with a high specific surface area or a planar conductive material with a low specific surface area may be used without limitation. However, in particular, the planar conductive material according to the present disclosure can be affected by dispersion to some extent in the electrode performance, so that a planar conductive material with a low specific surface area that does not cause a problem in dispersion is used particularly preferably.

In an exemplary embodiment of the present disclosure, the planar conductive material may have a BET specific surface area of 1 m$^2$/g or greater.

In another exemplary embodiment, the planar conductive material may have a BET specific surface area of 1 m$^2$/g or greater and 500 m$^2$/g or less, preferably 5 m$^2$/g or greater and 300 m$^2$/g or less, and more preferably 5 m$^2$/g or greater and 250 m$^2$/g or less.

In another exemplary embodiment, the planar conductive material is a planar conductive material with a high specific surface area, and the BET specific surface area may satisfy a range of 50 m$^2$/g or greater and 500 m$^2$/g or less, preferably 80 m$^2$/g or greater and 300 m$^2$/g or less, and more preferably 100 m$^2$/g or greater and 250 m$^2$/g or less.

In another exemplary embodiment, the planar conductive material is a planar conductive material with a low specific surface area, and the BET specific surface area may satisfy a range of 1 m$^2$/g or greater and 40 m$^2$/g or less, preferably 5 m$^2$/g or greater and 30 m$^2$/g or less, and more preferably 5 m$^2$/g or greater and 25 m$^2$/g or less.

Other conductive materials may include linear conductive materials such as carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an sp2 bonding structure. In this case, the characteristics of a conductor or a semiconductor may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In an exemplary embodiment of the present disclosure, the negative electrode conductive material may include a linear conductive material and the linear conductive material may be carbon nanotubes.

In an exemplary embodiment of the present disclosure, the carbon nanotubes may be single-walled carbon nanotubes (SWCNT) or/and multi-walled carbon nanotubes (MWCNT). When the linear conductive material is SWCNT, a length of the SWCNT may be 0.5 $\mu$m to 100 $\mu$m, and preferably 1 $\mu$m to 80 $\mu$m.

In an exemplary embodiment of the present disclosure, the negative electrode conductive material may be included in an amount of 5 parts by weight or more and 40 parts by weight or less based on 100 parts by weight of the negative electrode active material layer composition.

In another exemplary embodiment, the negative electrode conductive material may be included in an amount of 5 parts by weight or more and 40 parts by weight or less, preferably 5 parts by weight or more and 30 parts by weight or less, and more preferably 5 parts by weight or more and 25 parts by weight or less based on 100 parts by weight of the negative electrode active material layer composition.

In an exemplary embodiment of the present disclosure, the negative electrode conductive material may include a planar conductive material and a linear conductive material, and a ratio of the planar conductive material to the linear conductive material may satisfy 1:0.001 to 1:0.3.

In an exemplary embodiment of the present disclosure, as the negative electrode conductive material includes the planar conductive material and the linear conductive material and the composition and ratio described above are satisfied, respectively, the life characteristics of an existing lithium secondary battery are not significantly affected, and the number of points where the battery can be charged and discharged increases, so that output characteristics are excellent at a high C-rate.

The negative electrode conductive material according to the present disclosure has a completely different configuration from a conductive material that is applied to the positive electrode. That is, the negative electrode conductive material according to the present disclosure serves to hold the contact between silicon-based active materials whose volume expansion of the electrode is very large due to charging and discharging, and the positive electrode conductive material serves to impart some conductivity while serving as a buffer when roll-pressed, and is completely different from the negative electrode conductive material of the present disclosure in terms of configuration and role.

In addition, the negative electrode conductive material according to the present disclosure is applied to a silicon-based active material, and has a completely different configuration from that of a conductive material that is applied to a graphite-based active material. That is, since a conductive material that is used for an electrode having a graphite-based active material simply has smaller particles than the active material, the conductive material has characteristics of improving output characteristics and imparting some conductivity, and is completely different from the negative electrode conductive material that is applied together with the silicon-based active material as in the present disclosure, in terms of configuration and role.

In an exemplary embodiment of the present disclosure, the plate-like conductive material that is used as the negative electrode conductive material described above has a different structure and role from those of the carbon-based active material that is generally used as the negative electrode active material. Specifically, the carbon-based active material that is used as the negative electrode active material may be artificial graphite or natural graphite, and refers to a material that is processed into a spherical or point-like shape and used so as to facilitate storage and release of lithium ions.

On the other hand, the plate-like conductive material that is used as the negative electrode conductive material is a material having a planar or plate-like shape, and may be expressed as plate-like graphite. That is, the plate-like conductive material is a material that is included in order to maintain a conductive path in the negative electrode active material layer, and refers to a material for securing a conductive path in a planar shape inside the negative electrode active material layer, rather than playing a role in storing and releasing lithium.

That is, in the present disclosure, the use of plate-like graphite as a conductive material means that graphite is processed into a planar or plate-like shape and used as a material for securing a conductive path rather than playing a role in storing or releasing lithium. In this case, the negative electrode active material included together has high-capacity characteristics with respect to storing and releasing lithium, and serves to store and release all lithium ions transferred from the positive electrode.

On the other hand, in the present disclosure, the use of a carbon-based active material as an active material means that the carbon-based active material is processed into a point-like or spherical shape and used as a material for storing or releasing lithium.

In an exemplary embodiment of the present disclosure, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-described materials in which a hydrogen is substituted with Li, Na, Ca, etc., and may also include various copolymers thereof.

The negative electrode binder according to an exemplary embodiment of the present disclosure serves to hold the silicon-based active material and the negative electrode conductive material in order to prevent distortion and structural deformation of the negative electrode structure when the volume of the silicon-based active material expands and relaxes. When such roles are satisfied, all of the general negative electrode binders can be applied. Specifically, an aqueous binder may be used, and more specifically, a polyacrylamide (PAM)-based binder may be used.

In an exemplary embodiment of the present disclosure, the negative electrode binder may be included in an amount of 30 parts by weight or less, preferably 25 parts by weight or less, and more preferably 20 parts by weight or less, and 5 parts by weight or more, and 8 parts by weight or more based on 100 parts by weight of the negative electrode active material layer composition.

In an exemplary embodiment of the present disclosure, the negative electrode may be formed by coating a negative electrode slurry including the negative electrode active material layer composition on one surface or both surfaces of the negative electrode current collector layer.

In an exemplary embodiment of the present disclosure, the negative electrode slurry may include a negative electrode active material layer composition and a slurry solvent.

In an exemplary embodiment of the present disclosure, a solid content of the negative electrode slurry may satisfy a range of 5% or more and 40% or less.

In another exemplary embodiment, the solid content of the negative electrode slurry may satisfy a range of 5% or more and 40% or less, preferably 7% or more and 35% or less, and more preferably 10% or more and 30% or less.

The solid content of the negative electrode slurry may mean a content of the negative electrode composition included in the negative electrode slurry, and may mean a content of the negative electrode composition based on 100 parts by weight of the negative electrode slurry.

When the solid content of the negative electrode slurry satisfies the above range, the viscosity is appropriate during formation of the negative electrode active material layer, so that particle agglomeration of the negative electrode composition is minimized to efficiently form the negative electrode active material layer.

In an exemplary embodiment of the present disclosure, the slurry solvent may be used without limitation as long as it can disperse the negative electrode composition described above, and specifically, water or N-Methyl-2-pyrrolidone (NMP) may be used.

In an exemplary embodiment of the present disclosure, the positive electrode includes a positive electrode current collector layer and a positive electrode active material layer provided on one surface or both surfaces of the positive electrode current collector layer.

In the positive electrode, the positive electrode current collector layer is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector layer may typically have a thickness of 1 to 500 $\mu$m, and a surface of the positive electrode current collector layer may be formed with microscopic irregularities to enhance adhesive force with the positive electrode active material. For example, the positive electrode current collector layer may be used in various forms such as a film, a sheet, a foil, a net, a porous body, a foamed body, and a non-woven fabric body.

In the present disclosure, an average particle diameter (D50) of the single-particle positive electrode active material may be 1 $\mu$m or greater and 12 $\mu$m or less, 1 $\mu$m or greater and 8 $\mu$m or less, 1 $\mu$m or greater and 6 $\mu$m or less, greater than 1 $\mu$m and 12 $\mu$m or less, greater than 1 $\mu$m and 8 $\mu$m or less, or greater than 1 $\mu$m and 6 $\mu$m or less.

Even when the single-particle positive electrode active material is formed with small particles having an average particle diameter (D50) of 1 $\mu$m or greater and 12 $\mu$m or less, the particle strength may be excellent. For example, the single particle may have a particle strength of 100 to 300 MPa when roll-pressing with a force of 650 kgf/cm$^2$. Accordingly, even when the single particles are roll-pressed with a strong force of 650 kgf/cm$^2$, the phenomenon of an increase in micro-particle in an electrode due to particle breakage is alleviated, which improves the life characteristics of the battery.

The single-particle positive electrode active material may be manufactured by mixing and firing a transition metal precursor and a lithium source material. The secondary particles may be manufactured by a method different from that of the single particles, and the composition thereof may be the same as or different from that of the single particles.

The method of forming the single-particle positive electrode active material is not particularly limited, but in general, the single-particle positive electrode active material may be formed by increasing firing temperature to achieve overfiring, or may be manufactured by a method of using an additive such as a grain growth promoter that helps overfiring, changing a starting material, or the like.

For example, the firing is performed at a temperature at which single particles can be formed. To this end, the firing should be performed at a temperature higher than a temperature during manufacture of the secondary particles. For example, when the composition of the precursor is the same, the firing should be performed at a temperature about 30°C to 100°C higher than a temperature during manufacture of the secondary particles. The firing temperature for forming the single particles may vary depending on the metal composition in the precursor. For example, when forming single particles with a high-Ni NCM-based lithium composite transition metal oxide having a nickel (Ni) content of 80 mol% or more, the firing temperature may be about 700°C to 1000°C, and preferably about 800°C to 950°C. When the firing temperature satisfies the above range, a positive electrode active material including single particles having excellent electrochemical properties can be manufactured. If the firing temperature is below 790°C, a positive electrode active material including a lithium composite transition metal compound in the form of secondary particles may be manufactured, and if the firing temperature exceeds 950°C, excessive firing occurs and a layered crystal structure is not properly formed, so that the electrochemical properties may be deteriorated.

In the present specification, the single-particle positive electrode active material is a term used to distinguish the same from typical secondary particles resulting from agglomeration of tens to hundreds of primary particles, and is a concept including a single particle consisting of one primary particle and a quasi-single particle form that is an agglomerate of 30 or less primary particles.

Specifically, in the present disclosure, the single-particle positive electrode active material may be a single particle consisting of one primary particle or a quasi-single particle form that is an agglomerate of 30 or less primary particles, and the secondary particle may be an agglomerate form of hundreds of primary particles.

In an exemplary embodiment of the present disclosure, the positive electrode active material in 100 parts by weight of the positive electrode active material layer composition may be included in an amount of 80 parts by weight or more and 99.9 parts by weight or less, preferably 90 parts by weight or more and 99.9 parts by weight or less, more preferably 95 parts by weight or more and 99.9 parts by weight or less, and most preferably 98 parts by weight or more and 99.9 parts by weight or less.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery to be constituted. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesive force between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

In an exemplary embodiment of the present disclosure, there is provided the lithium secondary battery in which a porosity of the positive electrode active material layer is 15% or greater and 30% or less and a porosity of the negative electrode active material layer is 20% or greater and 45% or less.

In another exemplary embodiment, the porosity of the negative electrode active material layer may satisfy a range of 20% or greater and 35% or less, preferably 23% or greater and 33% or less, and more preferably 25% or greater and 30% or less.

In another exemplary embodiment, the porosity of the positive electrode active material layer may satisfy a range of 15% or greater and 45% or less, preferably 17% or greater and 28% or less, and more preferably 20% or greater and 25% or less.

The porosity varies depending on the compositions, contents, degrees of rolling, and the like of the active material, the conductive material, and the binder included in each active material layer. In particular, when the porosity satisfies the above range, it is possible to solve the problems of fast charging performance and resistance due to lithium ion diffusion without breaking the active material.

In an exemplary embodiment of the present disclosure, there is provided the lithium secondary battery in which a discharge capacity loading amount of the positive electrode active material layer composition is 2 $mAh/cm^2$ or more and 5 $mAh/cm^2$ or less and a discharge capacity loading amount of the negative electrode active material layer composition is 1 to 1.1 times the discharge capacity loading amount of the positive electrode active material layer composition.

The discharge capacity loading amount of the negative electrode active material layer composition as described above is 1 to 1.1 times the discharge capacity loading amount of the positive electrode active material layer (NP100 to 110).

If the discharge capacity loading amount of the positive electrode active material layer composition is less than the above range, it is difficult to secure the energy density, and if the above range is exceeded, problems of fast charging, heat generation, and the like occur.

In the present disclosure, there is provided the lithium secondary battery in which thicknesses of the positive electrode and negative electrode current collector layers are 1 $\mu$m or greater and 100 $\mu$m or less and thicknesses of the positive electrode and negative electrode active material layers are 20 $\mu$m or greater and 500 $\mu$m or less.

In an exemplary embodiment of the present disclosure, the negative electrode may be a pre-lithiated negative electrode.

In an exemplary embodiment of the present disclosure, the positive electrode may be a pre-lithiated positive electrode.

In this case, the pre-lithiation method may be a method generally applied in the art.

Specifically, the negative electrode may be pre-lithiated through a lithium electroplating process, a lithium metal transfer process, a lithium metal deposition process, or a stabilized lithium metal powder (SLMP) coating process.

In the present disclosure, pre-lithiation of the positive electrode or negative electrode can increase the energy density and further increase the life. That is, the pre-lithiation makes it possible to secure life performance and energy density through a Li reservoir effect.

The separator serves to separate the negative electrode and the positive electrode and to provide a migration path of lithium ions, in which any separator may be used as the separator without particular limitation as long as it is typically used in a secondary battery, and particularly, a separator having high moisture-retention ability for an electrolyte as well as a low resistance to the migration of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a usual porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate and diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte solution, in which, for example, one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving life characteristics of the battery, suppressing a decrease in battery capacity, improving discharge capacity of the battery, and the like, in addition to the above-described electrolyte components.

An exemplary embodiment of the present disclosure provides a battery module including the secondary battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

In the present disclosure, the lithium secondary battery may have an energy density of 700 Wh/L or more and a TR rate of 4 mbar/Ah sec or less.

At this time, the TR rate can be calculated using Equation 3 below.

TR rate= (Max pressure - Pressure before ignition)/(Cell capacity)/(Time from just before ignition to Max pressure)

Specifically, the pressure and time of Equation 3 can be measured through a pressure gauge attached to the autoclave, and when the cell's thermal runaway proceeds, the pressure inside the autoclave increases due to the generated gas. The pressure at the point where the pressure starts to increase can be measured by the pressure gauge before ignition and the time just before ignition, and the pressure at the point where the pressure is at its maximum can be measured in Max pressure and time to Max pressure.

That is, by applying the above-described positive electrode and negative electrode, the energy density and thermal stability as described above can be secured.

Hereinafter, preferred examples will be provided for better understanding of the present disclosure. It will be apparent to one skilled in the art that the examples are only provided to illustrate the present disclosure and various modifications and alterations are possible within the scope and technical spirit of the present disclosure. Such modifications and alterations naturally fall within the scope of claims included herein.

**<Preparation Example>**

**(1) Preparation of Positive Electrode**

$Li(Ni_aCo_bMn_c)O_2$ and LMFP were used as the positive electrode active material.

In this case, NCM of the positive electrode active material excluding lithium (Li) and oxygen ($O_2$) had a ratio of Ni:Co:Mn = 70:20:10, satisfying the ratio of a:b:c = 70:20: 10 (a:b:c = 0.70:0.20:0.10). In addition, D50 was 3.8 $\mu$m, Dmin and Dmax were 1.2 $\mu$m and 13 $\mu$m, the BET specific surface area was 0.64 $m^2$/g, and the true density was 4.78 to 4.80 $g/cm^3$.

The Mn content in the LMFP was 60 at%.

The positive electrode active material, the positive electrode conductive material (LB. CNT), and the binder (PVdF, KF9700) were added to a solvent (N-methylpyrrolidone, NMP) at a weight ratio of 97.96:0.8:1.24 to prepare a positive electrode slurry. The positive electrode slurry was applied (4 mAh/$cm^2$) to an aluminum (Al) thin film having a thickness of 12 $\mu$m as a positive electrode current collector, dried, and then roll-pressed to prepare a positive electrode (porosity: 23%).

**(2) Preparation of Negative Electrode**

A negative electrode active material layer composition was prepared using Si/C : artificial graphite (20:80) as a silicon-based active material, a first conductive material, a second conductive material, and polyacrylamide as a binder at a weight ratio of 80:9.6:0.4:10. A negative electrode slurry (solid concentration: 28 wt%) was prepared by adding the composition to distilled water as a solvent for formation of a negative electrode slurry.

The first conductive material was plate-like graphite (specific surface area: 17 $m^2$/g, average particle diameter (D50): 3.5 $\mu$m), and the second conductive material was carbon nanotubes.

As a mixing method, the first conductive material, the second conductive material, the binder and water were dispersed at 2500 rpm for 30 minutes by using a homo mixer, the active material was added thereto, and the resultant mixture was dispersed at 2500 rpm for 30 minutes to fabricate a slurry.

The negative electrode slurry was coated on both surfaces of a copper current collector (thickness: 8 $\mu$m) serving as a negative electrode current collector with a capacity loading amount of 3.78 mAh/ $cm^2$, which was then roll-pressed and dried in a vacuum oven at 130°C for 10 hours to form a negative electrode active material layer (thickness: 23 $\mu$m) (porosity 28%).

**(3) Preparation of Secondary Battery**

An electrode assembly was prepared by interposing a compression-resistant thin film separator (PE 12 um) with ceramic coating 3 um/3 um between the positive electrode and the negative electrode. After placing the electrode assembly inside a case, an electrolyte was injected into the case to prepare a lithium secondary battery.

At this time, the positive electrode and the negative electrode satisfied the compositions and contents shown in TABLE 1 below.

**TABLE 1**

| | Composition of positive electrode active material | Content of positive electrode active material | Composition of negative electrode | Content of negative electrode active material |
|---|---|---|---|---|
| Example 1 | $Li(Ni_aCo_bMn_c)O_2$:LMFP a:b:c=70:20:10 | 50:50 | Si/C:artificial graphite | 20:80 |
| Example 2 | $Li(Ni_aCo_bMn_c)O_2$:LMFP a:b:c=70:20:10 | 55:45 | Si/C:artificial graphite | 20:80 |
| Example 3 | $Li(Ni_aCo_bMn_c)O_2$:LMFP a:b:c=70:20:10 | 60:40 | Si/C:artificial graphite | 20:80 |
| Example 4 | $Li(Ni_aCo_bMn_c)O_2$:LMFP a:b:c=70:20:10 | 65:35 | Si/C:artificial graphite | 20:80 |
| Example 5 | $Li(Ni_aCo_bMn_c)O_2$:LMFP a:b:c=70:20:10 | 70:30 | Si/C:artificial graphite | 20:80 |
| Example 6 | $Li(Ni_aCo_bMn_c)O_2$:LMFP a:b:c=70:20:10 | 80:20 | Si/C:artificial graphite | 10:90 |
| Example 7 | $Li(Ni_aCo_bMn_c)O_2$:LMFP a:b:c=70:20:10 | 75:25 | Si/C:artificial graphite | 10:90 |
| Example 8 | $Li(Ni_aCo_bMn_c)O_2$:LMFP a:b:c=70:20:10 | 70:30 | Si/C:artificial graphite | 10:90 |
| Example 9 | $Li(Ni_aCo_bMn_c)O_2$:LMFP a:b:c=70:20:10 | 30:70 | Si/C:artificial graphite | 50:50 |
| Example 10 | $Li(Ni_aCo_bMn_c)O_2$:LMFP a:b:c=70:20:10 | 40:60 | Si/C:artificial graphite | 50:50 |
| Example 11 | $Li(Ni_aCo_bMn_c)O_2$:LMFP a:b:c=70:20:10 | 50:50 | Si/C:artificial graphite | 50:50 |
| Example 12 | $Li(Ni_aCo_bMn_c)O_2$:LMFP a:b:c=70:20:10 | 20:80 | Si/C:artificial graphite | 100:0 |
| Example 13 | $Li(Ni_aCo_bMn_c)O_2$:LMFP a:b:c=70:20:10 | 30:70 | Si/C:artificial graphite | 100:0 |
| Example 14 | $Li(Ni_aCo_bMn_c)O_2$:LMFP a:b:c=70:20:10 | 40:60 | Si/C:artificial graphite | 100:0 |
| Comparative Example 1 | $Li(Ni_aCo_bMn_c)O_2$ a:b:c=70:20:10 | 100 | Si/C:artificial graphite | 20:80 |
| Comparative Example 2 | $Li(Ni_aCo_bMn_c)O_2$ a:b:c=70:20:10 | 100 | Si/C | 100 |
| Comparative Example 3 | $Li(Ni_aCo_bMn_c)O_2$ a:b:c=70:20:10 | 100 | artificial graphite | 100 |
| Comparative Example 4 | LMFP | 100 | Si/C:artificial graphite | 20:80 |
| Comparative Example 5 | LMFP | 100 | Si/C | 100 |
| Comparative Example 6 | LMFP | 100 | artificial graphite | 100 |
| Comparative Example 7 | $Li(Ni_aCo_bMn_c)O_2$:LMFP a:b:c=70:20:10 | 50:50 | Si/C | 100 |

(continued)

| | Composition of positive electrode active material | Content of positive electrode active material | Composition of negative electrode | Content of negative electrode active material |
|---|---|---|---|---|
| Comparative Example 8 | $Li(Ni_aCo_bMn_c)O_2$:LMFP a:b:c=70:20:10 | 50:50 | artificial graphite | 100 |
| Comparative Example 9 | $Li(Ni_aCo_bMn_c)O_2$:LMFP a:b:c=70:20:10 | 97:3 | Si/C:artificial graphite | 20:80 |
| Comparative Example 10 | $Li(Ni_aCo_bMn_c)O_2$:LMFP a:b:c=70:20:10 | 5:95 | Si/C:artificial graphite | 20:80 |
| Comparative Example 11 | $Li(Ni_aCo_bMn_c)O_2$ :LMFP a:b:c=70:20:10 | 71.28:28.72 | Si/C : artificial graphite | 39.02:60.98 |
| Comparative Example 12 | $Li(Ni_aCo_bMn_c)O_2$ :LMFP a:b:c=70:20:10 | 71.28:28.72 | Si/C : artificial graphite | 58.82:41.18 |
| Comparative Example 13 | $Li(Ni_aCo_bMn_c)O_2$ :LMFP a:b:c=70:20:10 | 71.28:28.72 | Si/C : artificial graphite | 70.73:29.27 |
| Comparative Example 14 | $Li(Ni_aCo_bMn_c)O_2$ :LMFP a:b:c=70:20:10 | 71.28:28.72 | Si/C : artificial graphite | 82.35:17.65 |
| Comparative Example 15 | $Li(Ni_aCo_bMn_c)O_2$ :LMFP a:b:c=70:20:10 | 73.4:26.6 | Si/C : artificial graphite | 70.73:29.27 |
| Comparative Example 16 | $Li(Ni_aCo_bMn_c)O_2$ :LMFP a:b:c=70:20:10 | 73.4:26.6 | Si/C : artificial graphite | 100:0 |
| Comparative Example 17 | $Li(Ni_aCo_bMn_c)O_2$ :LMFP a:b:c=70:20:10 | 90:10 | Si/C : artificial graphite | 20:80 |
| Comparative Example 18 | $Li(Ni_aCo_bMn_c)O_2$ :LMFP a:b:c=70:20:10 | 80:20 | Si/C : artificial graphite | 30:70 |
| Comparative Example 19 | $Li(Ni_aCo_bMn_c)O_2$ :LMFP a:b:c=70:20:10 | 70:30 | Si/C : artificial graphite | 40:60 |
| Comparative Example 20 | $Li(Ni_aCo_bMn_c)O_2$ :LMFP a:b:c=70:20:10 | 60:40 | Si/C : artificial graphite | 60:40 |
| Comparative Example 21 | $Li(Ni_aCo_bMn_c)O_2$ :LMFP a:b:c=70:20:10 | 50:50 | Si/C : artificial graphite | 90:10 |
| Comparative Example 22 | $Li(Ni_aCo_bMn_c)O_2$ :LMFP a:b:c=70:20:10 | 60:40 | Si/C : artificial graphite | 10:90 |
| Comparative Example 23 | $Li(Ni_aCo_bMn_c)O_2$ :LMFP a:b:c=70:20:10 | 40:60 | Si/C : artificial graphite | 20:80 |
| Comparative Example 24 | $Li(Ni_aCo_bMn_c)O_2$ :LMFP a:b:c=70:20:10 | 30:70 | Si/C : artificial graphite | 30:70 |
| Comparative Example 25 | $Li(Ni_aCo_bMn_c)O_2$ :LMFP a:b:c=70:20:10 | 20:80 | Si/C : artificial graphite | 50:50 |
| Comparative Example 26 | $Li(Ni_aCo_bMn_c)O_2$ :LMFP a:b:c=70:20:10 | 10:90 | Si/C : artificial graphite | 90:10 |

**<Experimental Example>**

**1) Thermal Propagation (TP) evaluation**

For the lithium secondary batteries prepared in the above Examples and Comparative Examples, a structure as shown in FIG. 2 was formed for evaluation, and the heat pad in contact with the cell was heated to induce thermal runaway of the cell.

The experiment was performed in an autoclave (isolated from the external environment/atmosphere) and in an atmosphere of $N_2$, the pressure of gas emitted when thermal runaway occurred was measured by a pressure gauge in the autoclave, and the TR rate according to this is shown in TABLE 2 below.

TR Rate = (Max pressure - Pressure before ignition)/(Cell capacity)/(Time from just before ignition to Max pressure)

**TABLE 2**

|  | TR rate (mbar/Ah sec) |
|---|---|
| Example 1 | 1.7 |
| Example 2 | 2.0 |
| Example 3 | 2.3 |
| Example 4 | 2.6 |
| Example 5 | 3.0 |
| Example 6 | 2.9 |
| Example 7 | 2.6 |
| Example 8 | 2.3 |
| Example 9 | 1.7 |
| Example 10 | 2.1 |
| Example 11 | 2.9 |
| Example 12 | 1.6 |
| Example 13 | 2.4 |
| Example 14 | 3.3 |
| Comparative Example 1 | 9 |
| Comparative Example 2 | 20 |
| Comparative Example 3 | 4 |
| Comparative Example 4 | 0.4 |
| Comparative Example 5 | 0.6 |
| Comparative Example 6 | 0.1 |
| Comparative Example 7 | 4.5 |
| Comparative Example 8 | 0.9 |
| Comparative Example 9 | 7 |
| Comparative Example 10 | 0.4 |
| Comparative Example 11 | 4.4 |
| Comparative Example 12 | 5.7 |
| Comparative Example 13 | 6.4 |
| Comparative Example 14 | 7.0 |
| Comparative Example 15 | 6.7 |
| Comparative Example 16 | 8.3 |

(continued)

|  | TR rate (mbar/Ah sec) |
|---|---|
| Comparative Example 17 | 4.9 |
| Comparative Example 18 | 4.7 |
| Comparative Example 19 | 4.3 |
| Comparative Example 20 | 4.3 |
| Comparative Example 21 | 4.2 |
| Comparative Example 22 | 1.7 |
| Comparative Example 23 | 1.3 |
| Comparative Example 24 | 1.2 |
| Comparative Example 25 | 1.1 |
| Comparative Example 26 | 1.0 |

**2) Energy Density (ED) evaluation**

For the lithium secondary batteries prepared in the above Examples and Comparative Examples, the energy density was calculated using the discharge energy obtained when charging and discharging at 0.33C and the volume of the battery. However, the batteries used in experiments are generally manufactured in smaller sizes than batteries mounted on automobiles and have a low space utilization rate. Therefore, when conducting the ED evaluation, the discharge energy and volume are converted and calculated based on the size of the battery mounted on the automobile.

**TABLE 3**

|  | ED (Wh/L) |
|---|---|
| Example 1 | 700 |
| Example 2 | 710 |
| Example 3 | 720 |
| Example 4 | 730 |
| Example 5 | 740 |
| Example 6 | 718 |
| Example 7 | 710 |
| Example 8 | 700 |
| Example 9 | 710 |
| Example 10 | 725 |
| Example 11 | 740 |
| Example 12 | 709 |
| Example 13 | 720 |
| Example 14 | 735 |
| Comparative Example 1 | 800 |
| Comparative Example 2 | 950 |
| Comparative Example 3 | 650 |
| Comparative Example 4 | 580 |
| Comparative Example 5 | 653 |
| Comparative Example 6 | 480 |
| Comparative Example 7 | 780 |

(continued)

|  | ED (Wh/L) |
|---|---|
| Comparative Example 8 | 560 |
| Comparative Example 9 | 730 |
| Comparative Example 10 | 580 |
| Comparative Example 11 | 804 |
| Comparative Example 12 | 830 |
| Comparative Example 13 | 845 |
| Comparative Example 14 | 855 |
| Comparative Example 15 | 852 |
| Comparative Example 16 | 867 |
| Comparative Example 17 | 801 |
| Comparative Example 18 | 810 |
| Comparative Example 19 | 804 |
| Comparative Example 20 | 802 |
| Comparative Example 21 | 796 |
| Comparative Example 22 | 676 |
| Comparative Example 23 | 676 |
| Comparative Example 24 | 681 |
| Comparative Example 25 | 679 |
| Comparative Example 26 | 678 |

In the case of the lithium secondary battery according to the present disclosure, the energy density can be satisfied by including the layered active material containing nickel, and the silicon-based active material in the positive electrode so as to secure the energy density, instead of simply applying the carbon-based active material and the olivine-based active material individually, and the problem of the thermal stability (TP) due to the resulting increase in capacity can be solved by deriving the weight ratio satisfying Formulas 1 and 2 above. In general, as the content of the silicon-based active material in the negative electrode increases, the energy density increases, but the thermal stability becomes inferior. Accordingly, when the content of the olivine-based active material in the positive electrode increases, the problem of thermal stability is improved, but the energy density decreases. However, through research, the inventors of the present disclosure derived the ratios of Formulas 1 and 2 as described above, and confirmed through the Examples and Comparative Examples that it is possible to secure the energy density and the thermal stability at the same time when the ratios are applied.

From the perspective of cell energy density, as the olivine-based active material increases, the positive electrode becomes thicker, and the content of the silicon-based active material in the negative electrode should increase to compensate for the thickness. In the present disclosure, the lower limit value of the silicon-based active material content (B) is determined according to the content (A) of the olivine-based active material from the perspective of achieving a specific energy density. In particular, it could be confirmed through the Examples that, from the perspective of energy density, the energy density could be secured through $4.524+0.939 \times e^{0.0537 \times A} < B$ in Formula 1.

On the other hand, as the content of the olivine-based active material increases, the thermal stability is excellent, so more silicon-based active materials can be applied. The upper limit value of the silicon-based active material content (B) is determined according to the content (A) of the olivine-based active material from the perspective of TR rate. In particular, it could be confirmed that $B < -4.312+5.183 \times e^{0.0537 \times A}$ in Formula 1 should be satisfied so as to satisfy the TR rate.

That is, it could be seen that the lithium secondary battery according to the present disclosure can secure the thermal stability and the energy density at the same time, which were previously incompatible, which can be achieved when the olivine-based active material and the silicon-based active material satisfy the relationship in Formula 1 of the present disclosure.

Comparative Examples 1 to 3 in which the lithium NCM oxide positive electrode was simply applied as a counter electrode of the negative electrode correspond to a case where the content of the silicon-based active material was adjusted or a graphite-based negative electrode was used.

In Comparative Examples 1 and 2, it could be confirmed that the energy density was satisfactory, but the thermal stability was low due to the high content of silicon-based active material, deteriorating the TR characteristics, and that when a graphite-based negative electrode was used as a negative electrode, which is a counter electrode, the thermal stability was secured but the energy density decreased.

Comparative Examples 4 to 6 in which an olivine-based positive electrode was applied as a counter electrode of the negative electrode correspond to a case where the content of the silicon-based active material was adjusted or a graphite-based negative electrode was used.

In Comparative Examples 4 to 6 where an olivine-based positive electrode was applied, the thermal stability was determined to be excellent, but it could be confirmed that the energy density was lowered because lithium NCM oxide was not mixed.

In Comparative Examples 7 to 9 in which olivine-based material and lithium NCM oxide were used together as the positive electrode, Comparative Example 7 did not satisfy the range of Formula 1 of the present disclosure, Comparative Example 8 used a graphite-based negative electrode alone, and Comparative Example 9 did not satisfy the ranges of Formula 1 and Formula 2 because the content of the olivine-based active material was low.

In Comparative Examples 7 and 9, it can be confirmed that the energy density could be satisfied at the desired level but the TR characteristics were deteriorated. In particular, it can be confirmed through Comparative Examples 7 and 9 that TR characteristics deteriorate when the range of Formula 1 of the present disclosure is not satisfied, and it could be confirmed that in Comparative Example 8, the TR characteristics were satisfied by using the graphite-based negative electrode but the energy density could not secured.

In addition, in the case of Comparative Examples 10 to 26, the range of Formula 1 is not satisfied, and as shown in TABLE 2 and TABLE 3, the energy density and/or TR characteristics are not satisfied, and in particular, through Comparative Examples 17 to 26, the effect of Examples that satisfying Formula 1 is superior to that of Comparative Examples.

For reference, Examples 10 to 26 correspond to cases where the amount of lithium NCM oxide active material in the positive electrode active material was increased and the amount of LMFP was reduced while the negative electrode was fixed based on Example 1. As can be seen from the data in TABLE 2 and 3, when the amount of lithium NCM oxide is increased to the range of the present disclosure, the energy density increases, but the thermal stability is inferior to that in Example 1. Examples 7 and 8 are similar to Example 6, and Examples 10, 11, 13 and 14 also show the same tendency. That is, the lithium secondary battery according to the present disclosure has the feature of being able to adjust the energy density and thermal stability to suit the intended use, when used within the range of Formula 1.

<Explanation of Reference Numerals and Symbols>

10: negative electrode current collector layer

20: negative electrode active material layer

30: separator

40: positive electrode active material layer

50: positive electrode current collector layer

100: negative Electrode

200: positive electrode

**Claims**

1. A lithium secondary battery comprising:

    a positive electrode;
    a negative electrode; and
    an electrolyte,

wherein the positive electrode comprises a positive electrode active material layer comprising a positive electrode active material layer composition,

wherein the negative electrode comprises a negative electrode active material layer comprising a negative electrode active material layer composition,

wherein the positive electrode active material layer composition comprises a positive electrode active material comprising a layered active material containing nickel, and an olivine-based active material,

wherein the negative electrode active material layer composition comprises a negative electrode active material comprising a silicon-based active material, and

wherein a part by weight of the olivine-based active material (A) based on 100 parts by weight of the positive electrode active material, and a part by weight of the silicon-based active material (B) based on 100 parts by weight of the negative electrode active material satisfy Formulas 1 and 2:

[Formula 1]

$$4.524 + 0.939 \times e^{0.0537 \times A} < B < -4.312 + 5.183 \times e^{0.0537 \times A}$$

[Formula 2]

$$10 \leq A \leq 90.$$

2. The lithium secondary battery of claim 1, wherein the layered active material containing nickel is included in an amount of 10 parts by weight or more and 90 parts by weight or less based on 100 parts by weight of the positive electrode active material.

3. The lithium secondary battery of claim 1, wherein the silicon-based active material is included in an amount of 5 parts by weight or more and 100 parts by weight or less based on 100 parts by weight of the negative electrode active material.

4. The lithium secondary battery of claim 1, wherein the negative electrode active material further comprises a carbon-based active material, and

wherein the silicon-based active material is included in an amount of 5 parts by weight or more and less than 100 parts by weight and the carbon-based active material is included in an amount of more than 0 part by weight and 95 parts by weight or less based on 100 parts by weight of the negative electrode active material.

5. The lithium secondary battery of claim 1, wherein the layered active material containing nickel is lithium nickel-cobalt-aluminum (NCA) oxide; lithium nickel-cobalt-manganese (NCM) oxide; or lithium nickel-cobalt-manganese-aluminum (NCMA) oxide, and

wherein the olivine-based active material is lithium manganese iron phosphate (LMFP) or lithium iron phosphate (LFP).

6. The lithium secondary battery of claim 1, wherein the layered active material containing nickel is lithium nickel-cobalt-manganese (NCM) oxide,

wherein the olivine-based active material is lithium manganese iron phosphate (LMFP), and

wherein more than 0 at% and equal to or less than 90 at% of Mn is included based on 100 at% of all elements contained in the LMFP.

7. The lithium secondary battery of claim 1, wherein the silicon-based active material comprises one or more selected from the group consisting of SiOx (0<x<2), Si/C, and a Si alloy.

8. The lithium secondary battery of claim 1, wherein the positive electrode active material has a form of a single-particle.

9. The lithium secondary battery of claim 1, wherein nickel contained in the layered active material containing nickel is included in an amount of 75 mol% or less based on a total metal excluding lithium.

10. The lithium secondary battery of claim 1, wherein the positive electrode active material layer has a porosity ranging from 15% to 30%, and

wherein the negative electrode active material layer has a porosity ranging from 20% to 45%.

11. The lithium secondary battery of claim 1, wherein a discharge capacity loading amount of the positive electrode active material layer composition is 2 mAh/cm$^2$ or more and 5 mAh/cm$^2$ or less, and
wherein a discharge capacity loading amount of the negative electrode active material layer composition is 1 to 1.1 times the discharge capacity loading amount of the positive electrode active material layer composition.

12. The lithium secondary battery of claim 1, wherein the positive electrode further comprises a positive electrode current collector and the negative electrode further comprises a negative electrode current collector,

    wherein thicknesses of the positive electrode current collector and the negative electrode current collector are 1 $\mu$m or greater and 100 $\mu$m or less, and
    wherein thicknesses of the positive electrode and negative electrode active material layers are 20 $\mu$m or greater and 500 $\mu$m or less.

13. The lithium secondary battery of claim 1, wherein the lithium secondary battery has an energy density of 700 Wh/L or more and has a TR rate represented by Equation 3 of 4 mbar/Ah sec or less:

    TR rate = (Max pressure - Pressure before ignition)/(Cell capacity)/(Time from just before ignition to Max pressure).

14. The lithium secondary battery of claim 1, wherein an average particle diameter (D50) of the silicon-based active material is 1 $\mu$m to 10 $\mu$m.

15. The lithium secondary battery of claim 1, wherein a Brunauer-Emmett-Teller (BET) surface area of the silicon-based active material is 0.01 m$^2$/g to 150.0 m$^2$/g.

16. The lithium secondary battery of claim 1, wherein the silicon-based active material has a crystalline or amorphous form, and not porous.

17. The lithium secondary battery of claim 1, wherein at least one of the positive electrode or the negative electrode is a pre-lithiated electrode.

18. The lithium secondary battery of claim 1, further comprising a separator between the positive electrode and the negative electrode.

**FIG. 1**

**FIG. 2**

**FIG. 3**

## INTERNATIONAL SEARCH REPORT

| International application No. |
| --- |
| **PCT/KR2024/016980** |

| A. | CLASSIFICATION OF SUBJECT MATTER |
| --- | --- |

**H01M 10/058**(2010.01)i; **H01M 4/131**(2010.01)i; **H01M 4/136**(2010.01)i; **H01M 4/36**(2006.01)i; **H01M 4/58**(2010.01)i; **H01M 4/525**(2010.01)i; **H01M 4/505**(2010.01)i; **H01M 4/133**(2010.01)i; **H01M 4/134**(2010.01)i; **H01M 4/38**(2006.01)i

According to International Patent Classification (IPC) or to both national classification and IPC

| B. | FIELDS SEARCHED |
| --- | --- |

Minimum documentation searched (classification system followed by classification symbols)

H01M 10/058(2010.01); H01M 10/052(2010.01); H01M 10/0525(2010.01); H01M 4/133(2010.01); H01M 4/36(2006.01); H01M 4/38(2006.01); H01M 4/48(2010.01); H01M 4/505(2010.01); H01M 4/525(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차 전지 (lithium secondary battery), 층상형 활물질 (layered active material), 올리빈 (olivine), 실리콘 (silicon)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2018-041675 A (TOYOTA INDUSTRIES CORP.) 15 March 2018 (2018-03-15)<br>See abstract; claim 1; and paragraphs [0015]-[0116]. | 1-18 |
| Y | KR 10-2022-0012577 A (SK ON CO., LTD.) 04 February 2022 (2022-02-04)<br>See paragraphs [0009]-[0094]. | 1-18 |
| Y | KR 10-2022-0041032 A (LG CHEM, LTD.) 31 March 2022 (2022-03-31)<br>See abstract; and claim 1. | 8 |
| A | KR 10-2016-0081679 A (DAE JOO ELECTRONIC MATERIALS CO., LTD.) 08 July 2016 (2016-07-08)<br>See abstract; and claim 1. | 1-18 |
| A | KR 10-2227302 B1 (LG CHEM, LTD.) 15 March 2021 (2021-03-15)<br>See abstract; and claim 1. | 1-18 |

☐ Further documents are listed in the continuation of Box C.   ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 February 2025** | **14 February 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/016980**

| Patent document cited in search report | | | Publication date (day/month/year) | Patent family member(s) | | | Publication date (day/month/year) |
|---|---|---|---|---|---|---|---|
| JP | 2018-041675 | A | 15 March 2018 | None | | | |
| KR | 10-2022-0012577 | A | 04 February 2022 | None | | | |
| KR | 10-2022-0041032 | A | 31 March 2022 | CN | 115529825 | A | 27 December 2022 |
| | | | | CN | 115529825 | B | 08 March 2024 |
| | | | | EP | 4137460 | A1 | 22 February 2023 |
| | | | | JP | 2023-521317 | A | 24 May 2023 |
| | | | | JP | 7476344 | B2 | 30 April 2024 |
| | | | | KR | 10-2498355 | B1 | 10 February 2023 |
| | | | | US | 2023-0290942 | A1 | 14 September 2023 |
| | | | | WO | 2022-065935 | A1 | 31 March 2022 |
| KR | 10-2016-0081679 | A | 08 July 2016 | KR | 10-2183396 | B1 | 26 November 2020 |
| | | | | US | 2016-0190572 | A1 | 30 June 2016 |
| | | | | US | 9577255 | B2 | 21 February 2017 |
| KR | 10-2227302 | B1 | 15 March 2021 | KR | 10-2018-0013512 | A | 07 February 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230148983